# DEMANDE DE BREVET EUROPEEN

(11) **EP 3 839 293 A1**
(43) Date de publication de la demande: **23.06.2021**
(21) Numéro de dépôt: 20213143.9
(22) Date de dépôt: 10.12.2020
(51) Int. Cl.: F16H 48/40

(54) **BOITIER DE DIFFERENTIEL ET ROULEMENT DE GUIDAGE ASSOCIE**

(30) Priorité: 17.12.2019 FR 1914689
(71) Demandeur: RENAULT s.a.s., 92100 Boulogne-Billancourt (FR)
(72) Inventeur: LALOS, Cédric, 78920 Ecquevilly (FR); SLIMANI, Khalid, 94150 Rungis (FR)

(57) **Abrégé**

La présente invention propose un ensemble comportant- un boîtier (10) de différentiel de transmission de véhicule automobile qui, à chacune de ses deux extrémités opposées, comporte un prolongement tubulaire (20, 22) de guidage en rotation d'un arbre interne de sortie du différentiel, et comportant un roulement (30) de guidage en rotation de l'un (22) des deux prolongements tubulaires qui comporte une bague intérieure (34) de roulement qui est montée par frettage sur une surface externe (26) de portée du prolongement tubulaire associé (22), caractérisé en ce que la bague intérieure (34) du roulement (30) et la surface externe de portée (26) du prolongement tubulaire associé (22) comportent des cannelures axiales complémentaires (50).

## Description

### Domaine technique de l'invention

La présente invention concerne un différentiel de transmission de véhicule automobile.
L'invention concerne plus particulièrement un ensemble comportant :
- un boîtier de différentiel de transmission de véhicule automobile qui, à chacune de ses deux extrémités axiales opposées, comporte un prolongement tubulaire de guidage en rotation d'un arbre interne de sortie du différentiel ;
- et au moins un roulement de guidage en rotation de l'un des deux prolongements tubulaires qui comporte une bague intérieure de roulement qui est montée par frettage sur une surface externe de portée du prolongement tubulaire associé.

### Arrière-plan technique

Le document FR-A-2.634847 décrit et représente la conception générale connue d'un différentiel de transmission pour véhicule automobile dont le boîtier de différentiel est, à chacune de ses deux extrémités, guidé en rotation autour de son axe général par un roulement à rouleaux coniques qui sont ici montés selon un montage dit en « X ».
Chaque roulement est interposé radialement entre la surface externe de portée d'un prolongement tubulaire du boîtier et une portion complémentaire en vis-à-vis d'un élément de carter de transmission.
Pour le montage de chaque roulement, la bague intérieure du roulement est montée axialement par frettage sur le prolongement tubulaire associé.
La technique du frettage fait appel à l'élasticité naturelle des éléments composant la liaison pour assurer une liaison permettant la transmission d'efforts en rotation et/ou en translation.

Un tel type de montage et d'assemblage doit permettre d'assurer une fixation fiable et durable de la bague de roulement sur le prolongement tubulaire associé.
Toutefois, en fonction des applications et des efforts et couples mis en œuvre en fonctionnement de la transmission, on peut constater un phénomène de désolidarisation partielle ou totale de la bague intérieure de roulement de son prolongement tubulaire associé, et notamment une rotation de la bague intérieure par rapport au prolongement tubulaire associé.
Pour remédier à ce phénomène, aussi appelé « défrettage », une solution consiste à augmenter le frettage de la bague intérieure de roulement en jouant sur les différents paramètres de frettage.
Toutefois, l'augmentation du frettage peut aboutir à provoquer l'apparition de rétreint dans la zone de transmission, ce qui peut alors provoquer un risque de grippage entre le boîtier du différentiel et la transmission.
L'invention vise à résoudre ce problème.

### Résumé de l'invention

L'invention propose un ensemble du type mentionné précédemment, caractérisé en ce que la bague intérieure du roulement et la surface externe de portée du prolongement tubulaire associé comportent des cannelures complémentaires.
Selon d'autres caractéristiques de l'ensemble :
- lesdites cannelures sont des cannelures axiales complémentaires
- les cannelures de la bague intérieure du roulement débouchent axialement à leurs deux extrémités ;
- le prolongement tubulaire comporte une surface de butée contre laquelle la bague intérieure du roulement est en appui axial ;
- l'ensemble comporte un anneau de retenue axiale de la bague intérieure du roulement qui est monté dans une gorge radiale formée dans la surface externe de portée du prolongement tubulaire associé ;
- la gorge radiale est formée dans un tronçon cannelé de la surface externe de portée du prolongement tubulaire associé ;
- le roulement est un roulement à rouleaux coniques. ;
- l'ensemble comporte un autre roulement, pour le guidage en rotation de l'autre des deux prolongements tubulaires, qui comporte une bague intérieure de roulement qui est montée par frettage sur une surface externe de portée dudit autre prolongement tubulaire, et en ce que la bague intérieure dudit autre roulement et la surface externe de portée dudit autre prolongement tubulaire sont lisses, ou cannelées.
L'invention propose aussi un boîtier de différentiel de transmission de véhicule automobile comportant, à chacune de ses deux extrémités opposées, un prolongement tubulaire de guidage en rotation d'un arbre interne de sortie du différentiel,
caractérisé en ce que la surface externe de portée de l'un au moins des prolongements tubulaires comporte des cannelures, notamment des cannelures axiales.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue latérale d'un exemple de réalisation ensemble selon l'invention sur laquelle le boîtier de différentiel est représenté avec ses deux roulements de palier ;
[Fig.2] - la figure 2 est une vue en coupe par un plan axial vertical du boîtier de différentiel de la figure 1 ;

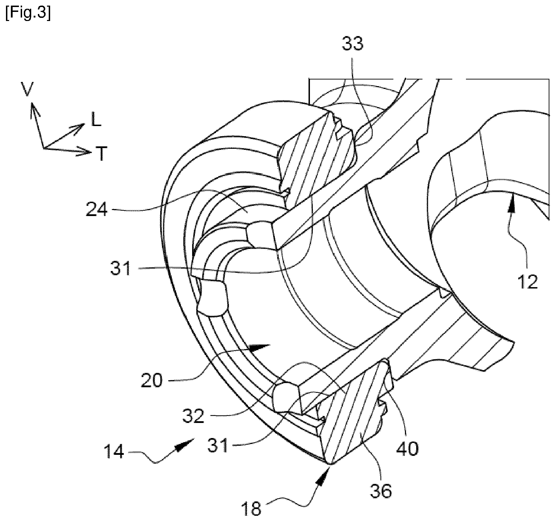

[Fig.3] - la figure 3 est une vue de détail en perspective et en coupe par un plan axial vertical du palier de roulement de gauche de conception selon l'état de la technique ;

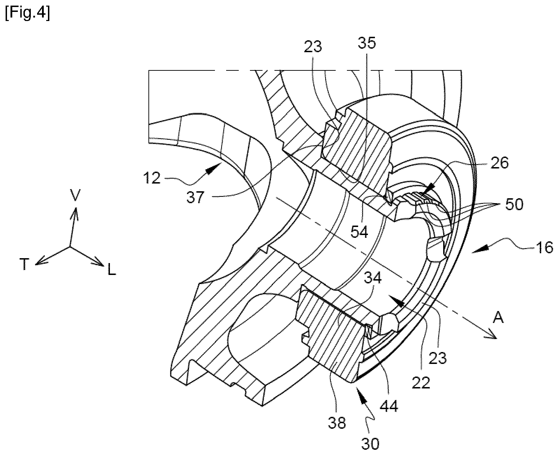

[Fig.4] - la figure 4 est une est une vue de détail en perspective et en coupe par un plan axial vertical du palier de roulement de droite de conception selon l'invention ;

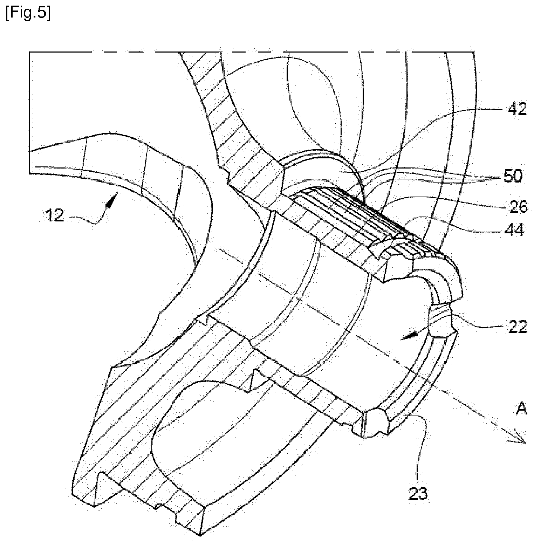

[Fig.5] - la figure 5 est une vue analogue à celle de la figure 4 sans le roulement de palier ;

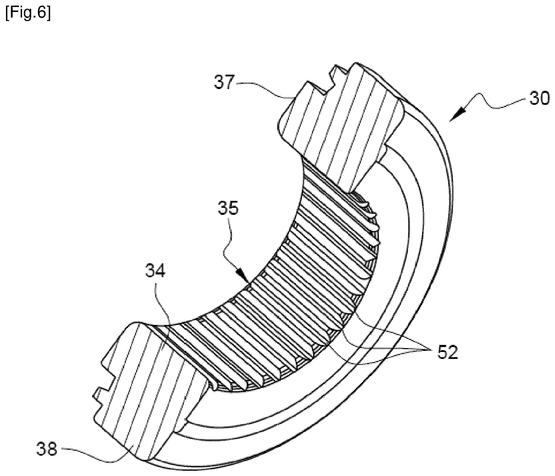

[Fig.6] - la figure 6 est une demi-vue en perspective du roulement de palier selon l'invention représenté à la figure 4 ;

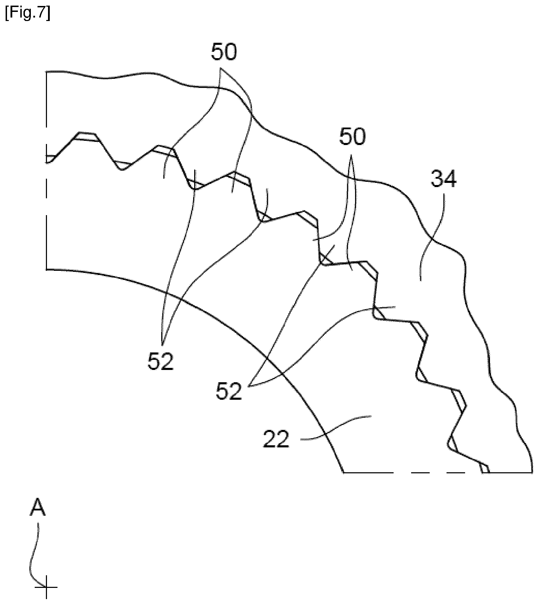

[Fig.7] - la figure 7 est une vue partielle en coupe par un plan radial qui représente la coopération des cannelures de la bague intérieure du roulement et du prolongement tubulaire associé représentés à la figure 4.

### Description détaillée de l'invention

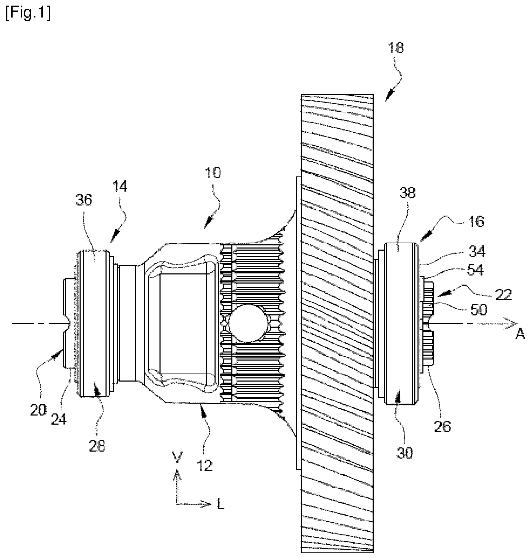

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal.
Par convention, l'axe longitudinal L est orienté de la gauche vers la droite et selon l'axe central A du boîtier de différentiel correspondant à l'axe de rotation commun aux deux arbres coaxiaux de sortie du différentiel.
Dans la description qui va suivre, des éléments identiques, similaires ou analogues seront désignés par les mêmes chiffres de référence.
On a représenté à la figure 1 un boitier 10 d'un différentiel d'une transmission (non représentée) d'un véhicule automobile.
Le boîtier 10 est essentiellement constitué d'un corps central creux 12 qui se prolonge axialement de part et d'autre par deux paliers de roulement de gauche 14 et de droite 16. Extérieurement, le corps central creux 12 porte une couronne dentée 18 d'entrée de couple pour l'entraînement en rotation du boîtier 10.
De part et d'autre de son corps central 12, le boîtier 12 comporte un prolongement tubulaire de gauche 20 et de droite 22 qui sont alignés axialement.

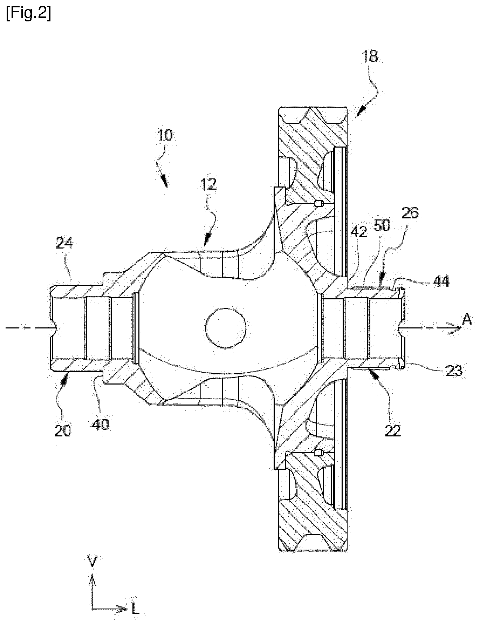

Chaque prolongement tubulaire 20, 22 est conçu pour guider en rotation un arbre de sortie de mouvement (Non représenté). Extérieurement, chaque prolongement tubulaire 20, 22 est délimité par une surface externe cylindrique de portée 24, 26 respectivement.
Chaque palier de roulement 14, 16 comporte un roulement 28, 30 qui est conçu et agencé pour guider le prolongement tubulaire associé 20, 22 en rotation dans un élément de carter de transmission (Non représenté), et guider ainsi le boîtier 10 en rotation autour de son axe A.
A titre d'exemple on limitatif, les deux roulements de guidage 28 et 30 sont par exemple des roulements à rouleaux coniques qui sont par exemple montés selon un montage dit en « X ».
Sur les figures, chaque roulement 28, 30 est représenté schématiquement sous la forme d'un bloc annulaire.
De manière connue, chaque roulement 28, 30 comporte une bague intérieure 32, 34 respectivement et une bague extérieure 36, 38 respectivement entre lesquels les éléments de roulement tels que des rouleaux coniques (Non représentés) sont interposés radialement.
Chaque bague extérieure 36, 38 est montée dans une partie complémentaire d'un élément de carter de transmission associé, tandis que chaque bague intérieure 32, 34 est montée sur la surface externe de portée 24, 26 du prolongement tubulaire associé 20, 22.
De manière connue, chaque bague intérieure 32, 34 est montée par frettage axiale et est ainsi rendue solidaire axialement et en rotation de son prolongement tubulaire associé.
La surface externe de portée 24 du prolongement tubulaire 20, et la surface cylindrique interne concave 31 de la bague intérieure 32 du roulement 28 sont lisses et ainsi, le palier de roulement de gauche 14 présente une conception selon l'état de la technique dans laquelle la bague intérieure 32 est montée axialement par frettage, de la gauche vers la droite en considérant les figures 1 et 2, jusqu'à ce que la face latérale de droite 33 de la bague intérieure 32 vienne en appui axial contre l'épaulement de butée axiale 40 qui délimite axialement vers la droite la surface externe de portée 24.
Selon l'invention, la conception du palier de roulement de droite 16 comporte une liaison en rotation de la bague intérieure 34 du roulement 30 et le prolongement tubulaire 22 par un ensemble de cannelures axiales complémentaires.
A cet effet, la surface externe portée 26 du prolongement tubulaire 22 comportent une série de cannelures axiales 50, dites ici cannelures « mâles », qui s'étendent depuis le bord d'extrémité libre 23 du prolongement tubulaire jusqu'à l'épaulement de butée axiale 42 qui délimite axialement vers la gauche la surface externe de portée 26.
Au voisinage de son bord d'extrémité libre 23, le prolongement tubulaire 22 comporte une gorge radiale 44 formée dans la surface externe de portée 26.
De manière complémentaire, la surface cylindrique interne concave 35 de la bague intérieure 35 du roulement 30 comporte une série de cannelures axiales 52, dites ici cannelures « femelles », qui s'étendent axialement sur toute la longueur axiale de la bague intérieure 34 et les cannelures 52 débouchent ainsi axialement à leurs deux extrémités.
La position axiale de montage de la bague intérieure 34 est déterminée par la venue en butée de sa face latérale de droite 37 contre l'épaulement de butée axiale 42.
Conformément aux enseignements de l'invention, l'agencement de cannelures complémentaires 50 et 52 permet de réduire le frettage axial de la bague intérieure 34 du roulement 30 sur la surface externe de portée 26 du prolongement tubulaire 22.
Afin de garantir l'immobilisation axiale de la bague intérieure 34 sur le prolongement tubulaire 22, on peut prévoir un anneau 54 de retenue axiale de la bague intérieure 34 du roulement 30 qui est monté dans la gorge radiale 54 formée dans la surface externe de portée 26 du prolongement tubulaire 22.
La mise en œuvre des enseignements de l'invention n'est pas limitée à liaison entre la bague intérieure 34 du roulement 30 et le prolongement tubulaire 22, mais peut aussi être appliquée à la liaison entre la bague intérieure 32 du roulement 28 et le prolongement tubulaire 20 du boîtier 10.

## Revendications

1. Ensemble comportant :
- un boîtier de différentiel de transmission de véhicule automobile qui, à chacune de ses deux extrémités opposées, comporte un prolongement tubulaire (20, 22) de guidage en rotation d'un arbre interne de sortie du différentiel ;
- et au moins un roulement (30) de guidage en rotation de l'un (22) des deux prolongements tubulaires qui comporte une bague intérieure (34) de roulement qui est montée par frettage sur une surface externe (26) de portée du prolongement tubulaire associé (22),
**caractérisé en ce que** la bague intérieure (34) du roulement (30) et la surface externe de portée (26) du prolongement tubulaire associé (22) comportent des cannelures complémentaires (50, 52).

2. Ensemble selon la revendication 1, **caractérisé en ce que** lesdites cannelures (50, 52) sont des cannelures axiales complémentaires.

3. Ensemble selon la revendication 1, **caractérisé en ce que** les cannelures (52) de la bague intérieure (34) du roulement (30) débouchent axialement à leurs deux extrémités.

4. Ensemble selon la revendication 1, **caractérisé en ce que** le prolongement tubulaire associé (22) comporte une surface de butée axiale (42) contre laquelle la bague intérieure (34) du roulement (30) est en appui axial.

5. Ensemble selon la revendication 1, **caractérisé en ce qu'**il comporte un anneau (54) de retenue axiale de la bague intérieure (34) du roulement (30) qui est monté dans une gorge radiale (44) formée dans la surface externe de portée (26) du prolongement tubulaire associé (22).

6. Ensemble selon les revendications 4 et 5, **caractérisé en ce que** la gorge radiale (44) est formée dans un tronçon cannelé (50) de la surface externe (26) de portée du prolongement tubulaire associé (22).

7. Ensemble selon la revendication 1, **caractérisé en ce que** le roulement (30) est un roulement à rouleaux coniques.

8. Ensemble selon la revendication 1, **caractérisé en ce qu'**il comporte un autre roulement (28), pour le guidage en rotation de l'autre (20) des deux prolongements tubulaires (20, 22), qui comporte une bague intérieure de roulement (32) qui est montée par frettage sur une surface externe (24) de portée dudit autre prolongement tubulaire (20), et **en ce que** la bague intérieure (32) dudit autre roulement (28) et la surface externe de portée (24) dudit autre prolongement tubulaire (20) sont lisses ou cannelées.

9. Boitier (10) de différentiel de transmission de véhicule automobile comportant, à chacune de ses deux extrémités opposées, un prolongement tubulaire (2à, 22) de guidage en rotation d'un arbre interne de sortie du différentiel,
**caractérisé en ce que** la surface externe de portée (26) de l'un (22) au moins des prolongements tubulaires comporte des cannelures (50).

10. Boitier (10) de différentiel selon la revendication précédente, **caractérisé en ce que** lesdites cannelures (50) sont des cannelures axiales
